# EUROPÄISCHE PATENTSCHRIFT

(11) **EP 4 341 584 B1**
(45) Veröffentlichungstag und Bekanntmachung des Hinweises auf die Patenterteilung: **19.02.2025**
(21) Anmeldenummer: 22723548.8
(22) Anmeldetag: 27.04.2022
(51) Int. Cl.: F16H 57/021, F16C 3/02, F16H 57/00, F16H 57/027

(54) **GETRIEBE MIT GEHÄUSETEIL UND HOHLWELLE**
GEARBOX COMPRISING A HOUSING PART AND A HOLLOW SHAFT
BOÎTE DE VITESSES COMPORTANT UNE PARTIE CARTER ET UN ARBRE CREUX

(30) Priorität: 20.05.2021 CN 202110561090; 15.07.2021 DE 102021003691
(43) Veröffentlichungstag der Anmeldung: 27.03.2024
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2022/025192
(87) Internationale Veröffentlichungsnummer: WO 2022/242907

(56) Entgegenhaltungen:
- EP-A1- 2 646 714
- WO-A1-2020/164715
- WO-A1-2020/249255
- DE-A1- 102015 105 243
- DE-A1- 102018 001 086

## Beschreibung

Die Erfindung betrifft ein Getriebe mit Gehäuseteil und Hohlwelle.

Es ist allgemein bekannt, dass ein Getriebe mit Gehäuseteil ausgeführt ist.

**Aus der** WO 2020/164715 A1 **ist als nächstliegender Stand der Technik eine Antriebsanordnung mit elektrischem Antrieb bekannt.**

**Aus der** WO 2020/249255 A1 **ist ein Getriebemotor bekannt.**

**Aus der** DE 10 2015 105 243 A1 **ist eine Antriebsanordnung mit Lüftungskanal bekannt.**

**Aus der** DE 10 2018 001 086 A1 **ist ein Antrieb bekannt.**

### Aus der EP 2 646 714 A1 ist ein Getriebe mit Getriebedeckel bekannt.

Der Erfindung liegt daher die Aufgabe zugrunde, ein Getriebe robust weiterzubilden.

Erfindungsgemäß wird die Aufgabe bei dem Getriebe nach den in Anspruch 1 angegebenen Merkmalen gelöst.

Von Vorteil ist dabei, dass ein zusätzliches Schräglager anbringbar ist und somit das Getriebe robuster ausgeführt ist, insbesondere gegen hohe Axialkräfte, die lastseitig über die Abtriebswelle eingebracht werden.

Bei einer vorteilhaften Ausgestaltung überlappt der von der Abtriebswelle in axialer Richtung überdeckte Bereich mit dem von der Hohlwelle in axialer Richtung überdeckten Bereich, wobei der von der Außenverzahnung in axialer Richtung überdeckte Bereich von dem von der Hohlwelle in axialer Richtung überdeckten Bereich umfasst ist,
insbesondere wobei die axiale Richtung parallel zur Richtung der Drehachse der Hohlwelle ausgerichtet ist. Von Vorteil ist dabei, dass das Wellenteil in die Hohlwelle eingesteckt ist und mit der auf der anderen Seite der Hohlwelle in die Hohlwelle eingesteckten Abtriebswelle schraubverbindbar ist. Auf diese Weise ist ein axiales Verspannen der Abtriebswelle gegen die Hohlwelle ermöglicht.

Bei einer vorteilhaften Ausgestaltung umfasst der von der Abtriebswelle zusammen mit dem von dem Wellenteil in axialer Richtung überdeckte Bereich den von der Hohlwelle in axialer Richtung überdeckten Bereich,
insbesondere wobei die axiale Richtung parallel zur Richtung der Drehachse der Hohlwelle ausgerichtet ist. Von Vorteil ist dabei, dass die Abtriebswelle zwar in die Hohlwelle eingesteckt und mittels der Verzahnungsbereiche drehfest verbunden ist, aber das Wellenteil von der anderen Seite her in die Hohlwelle eingesteckt ist und in die Abtriebswelle eingeschraubt ist.

Bei einer vorteilhaften Ausgestaltung sind die Abtriebswelle, die Hohlwelle und das Wellenteil koaxial zueinander ausgerichtet,
insbesondere wobei das Wellenteil als hohle Welle ausgeführt ist. Von Vorteil ist dabei, dass die Abtriebswelle die Hohlwelle sozusagen verlängert und somit das Schräglager anbringbar ist.

Bei einer vorteilhaften Ausgestaltung ist auf einen weiteren Außengewindebereich des Wellenteils eine Wellenmutter aufgeschraubt, welche die Hohlwelle berührt, insbesondere wobei die Wellenmutter als Kontermutter fungiert. Von Vorteil ist dabei, dass eine effiziente robuste Wellensicherung bereitstellbar ist.

Bei einer vorteilhaften Ausgestaltung steht der Innenring des Schräglagers gegen eine Stufe der Abtriebswelle an. Von Vorteil ist dabei, dass das Schräglager beim Anmontieren des Flanschteils an das Zwischenteil verspannbar ist. Davon unabhängig ist für die im Gehäuseteil aufgenommenen Lager der Hohlwelle eine Lagerspannung aufbaubar, indem ein Deckelteil mit dem Gehäuseteil verbindbar ist, so dass der Außenring eines der Lager angestellt ist gegen dieses Deckelteil.

Bei einer vorteilhaften Ausgestaltung ist wobei der Außenring des Schräglagers im Flanschteil aufgenommen und steht gegen das Zwischenteil an. Von Vorteil ist dabei, dass das Schräglager beim anmontieren des Flanschteils an das Zwischenteil verspannbar ist. Die Lagerspannung der beiden im Gehäuseteil aufgenommenen Lager der Hohlwelle ist davon separat, also unabhängig, einstellbar.

Bei einer vorteilhaften Ausgestaltung ist im Zwischenteil ein Wellendichtring aufgenommen, der zur Hohlwelle hin abdichtet. Von Vorteil ist dabei, dass verschiedene Schmierstoffe oder verschiedene Schmierstoffpegel im Innenraum des Getriebes beziehungsweise im Bereich des Schräglagers vorsehbar sind. Beispielsweise ist beim Schräglager ein Schmierfett vorsehbar und im Innenraum ein Öl.

Bei einer vorteilhaften Ausgestaltung ist im Zwischenteil ein weiterer Wellendichtring aufgenommen, der zur Abtriebswelle hin abdichtet. Von Vorteil ist dabei, dass kein Schmierstoff durch den Verbindungsbereich zwischen Abtriebswelle, Hohlwelle und Wellenteil in die äußere Umgebung dringen kann.

Bei einer vorteilhaften Ausgestaltung ist ein Zahnrad des Getriebes auf die Hohlwelle aufgesteckt und ist drehfest mit der Hohlwelle verbunden. Von Vorteil ist dabei, dass die Hohlwelle ein hohes Drehmoment von der abtreibenden Getriebestufe des Getriebes herausleitet und auch bei vorhandener, lastseitig eingetragener Axialraft der angetriebenen Last zur Verfügung stellt.

Bei einer vorteilhaften Ausgestaltung überlappt der vom Zahnrad in axialer Richtung überdeckte Bereich mit dem von der Abtriebswelle in axialer Richtung überdeckten Bereich. Vorzugsweise überlappt er dabei echt, so dass es also einen vom Zahnrad überdeckten Bereich gibt, der nicht von der Abtriebswelle überdeckt wird. Axial ragt das Zahnrad also über die Abtriebswelle hinaus.

Zusätzlich überlappt der vom Zahnrad in axialer Richtung überdeckte Bereich mit dem von dem Wellenteil in axialer Richtung überdeckten Bereich, insbesondere echt, so dass es also einen vom Zahnrad überdeckten Bereich gibt, der nicht von dem Wellenteil überdeckt wird. Axial ragt das Zahnrad also über den Wellenteil hinaus.

Von Vorteil ist dabei, dass die Stabilität erhöht ist, da das Zahnrad quasi als verbindendes Element wirkt.

**Erfindungsgemäß** ist im Flanschteil eine Radialbohrung angeordnet, in welcher ein Druckausgleichselement, insbesondere Entlüftungsventil, angeordnet ist. Von Vorteil ist dabei, dass ein Druckausgleich zur Umgebung stattfindet und somit die Dichtigkeit der Wellendichtringe nicht durch einen unzulässig hohen Überdruck gefährdet wird.

**Erfindungsgemäß** ist im Flanschteil eine von der Radialbohrung in Umfangsrichtung beabstandete, weitere Radialbohrung ausgeführt ist, in welcher ein transparentes Fenster aufgenommen,
insbesondere wobei das transparente Fenster als Kontrollfenster, insbesondere als Ölschauglas fungiert. Von Vorteil ist dabei, dass der Schmierstoffpegel überwachbar ist.

Bei einer vorteilhaften Ausgestaltung ist das Schräglager als Kegelrollenlager oder Tonnenlager ausgeführt. Von Vorteil ist dabei, dass hohe Axialkräfte aufnehmbar sind.

Bei einer vorteilhaften Ausgestaltung weist das Zwischenteil einen Zentrierbund auf, der an die Lageraufnahme eines Lagers der Hohlwelle anliegt. Von Vorteil ist dabei, dass eine präzise Ausrichtung erreicht ist.

Bei einer vorteilhaften Ausgestaltung ist das Getriebe ein Winkelgetriebe, insbesondere so dass die lastseitig eingeleitete Axialkraft senkrecht zur Drehachse der eintreibenden Welle ausgerichtet ist. Von Vorteil ist dabei, dass eine hohe Axialkraft bei einem Winkelgetriebe abtriebsseitig aufnehmbar ist.

Bei einer anderen vorteilhaften Ausgestaltung ist das Getriebe ein Parallelwellengetriebe, insbesondere so, dass die lastseitig eingeleitete Axialkraft parallel zur Drehachse der eintreibenden Welle ausgerichtet ist. Von Vorteil ist dabei, dass eine hohe Axialkraft bei einem Parallelwellengetriebe abtriebsseitig aufnehmbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist eine zusätzliche Axiallagerung eines erfindungsgemäßen Getriebes angeschnitten dargestellt.
In der Figur 2 ist ein Winkelgetriebe mit der Axiallagerung in Schrägansicht dargestellt.
In der Figur 3 ist ein Parallelwellengetriebe mit der Axiallagerung in Schrägansicht dargestellt.

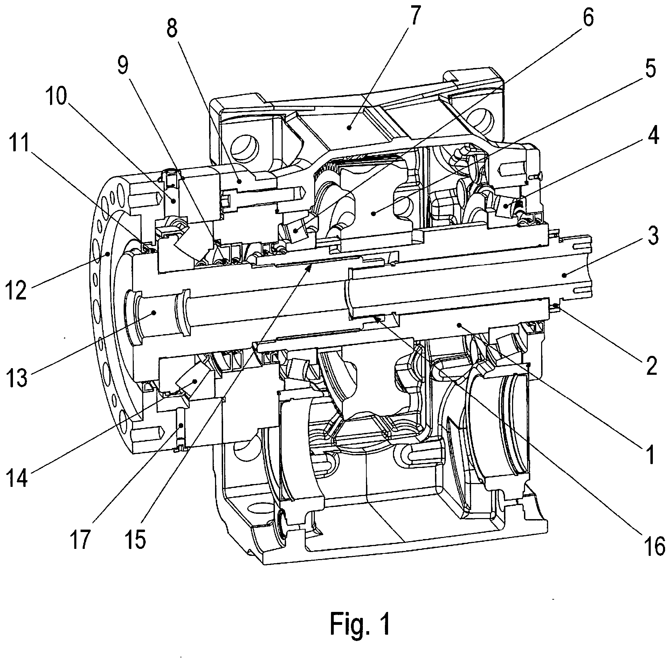

Wie in Figur 1 dargestellt, weist das Getriebe ein mit der abtreibenden Welle des Getriebes drehfest verbundenes Zahnrad 5 auf. Die abtreibende Welle ist als Hohlwelle 1 ausgeführt.

Das Zahnrad 5 ist mit einem weiteren, in der Figur 1 nicht gezeigten Verzahnungsteil im Eingriff, so dass das Zahnrad 5 mit diesem Verzahnungsteil die letzte Getriebestufe des Getriebes bildet.

Die Hohlwelle 1 ist über ein erstes Lager 4, das in dem Gehäuseteil 7 aufgenommen ist, und über ein zweites Lager 6, das in dem Gehäuseteil 7 aufgenommen ist, drehbar gelagert.

Eine Abtriebswelle 13 ist zur drehfesten Verbindung mit Hohlwelle 1 in die Hohlwelle 1 zumindest teilweise eingesteckt. Vorzugsweise weist die Abtriebswelle 13 einen außenverzahnten Verzahnungsbereich 15, insbesondere einen Keilverzahnungsbereich, auf, der in einen innenverzahnten Bereich der Hohlwelle 1 eingesteckt ist. Die verzahnten Bereiche erstrecken sich dabei in axialer Richtung.

Zur Sicherung der Abtriebswelle 13 weist die Abtriebswelle an ihrem dem Innenraum des Getriebes zugewandten Endbereich ein Innengewinde auf, in welches der Außengewindebereich 16 eines Wellenteils 3, insbesondere eines Hohlwellenteils 13, eingeschraubt ist. Das Wellenteil 3 ist von der von der Abtriebswelle 13 abgewandten Seite der Hohlwelle 1 aus in die Hohlwelle 1 eingesteckt.

Der Außengewindebereich 16 und der korrespondierende Innengewindebereich der Abtriebswelle 13 überdecken in axialer Richtung einen Bereich der von dem von der Hohlwelle 1 in axialer Richtung aus in axialer Richtung überdeckten Bereich vollständig umfasst ist. Somit ist also die Schraubverbindung zwischen Wellenteil 3 und Abtriebswelle 13 innerhalb der Hohlwelle 1 angeordnet.

Ebenso umfasst der vom Zahnrad 5 in axialer Richtung überdeckte Bereich den von der Schraubverbindung in axialer Richtung überdeckten Bereich.

Die Abtriebswelle 13 ist über ein Schräglager 14 drehbar gelagert, dessen Innenring gegen eine Stufe der Abtriebswelle 13 angestellt ist. Der Außenring des Schräglagers 14 ist axial gegen ein Zwischenteil 8 angestellt, das von Schrauben an das Gehäuseteil 7 des Getriebes angedrückt wird.

Dabei ist in einer Lageraufnahmebohrung des Gehäuseteils 7 des Getriebes das Lager 6 zur Lagerung der Hohlwelle 1 aufgenommen. Das Zwischenteil weist ein Zentriermittel, insbesondere einen Zentrierbund und/oder Zentrierkragen, auf, mit dem es an der Lageraufnahmebohrung zentriert ist.

An der vom Gehäuseteil 7 des Getriebes abgewandten Seite des Zwischenteils 8 ist das Flanschteil 12 angeordnet, welches mit mittels Schrauben mit dem Zwischenteil 8 verbunden ist und das Schräglager 14 aufnimmt.

Im Zwischenteil 8 ist ein Wellendichtring aufgenommen, der zur Abtriebswelle 13 hin abdichtet.

Außerdem ist im Zwischenteil 8 ein Wellendichtring 9 aufgenommen, der zur Hohlwelle 1 hin abdichtet.

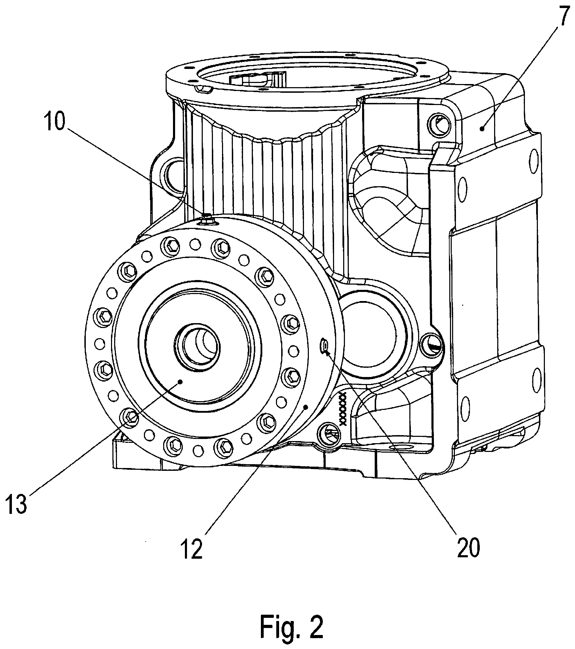

Wie in Figur 2 gezeigt, ist das Schräglager 14 samt Zwischenteil 8, Flanschteil 12 und Abtriebswelle 13 an einem als Winkelgetriebe ausgeführten Getriebe vorsehbar. Somit ist eine hohe Axialkraft lastseitig aufnehmbar und über das Gehäuseteil 7 abführbar.

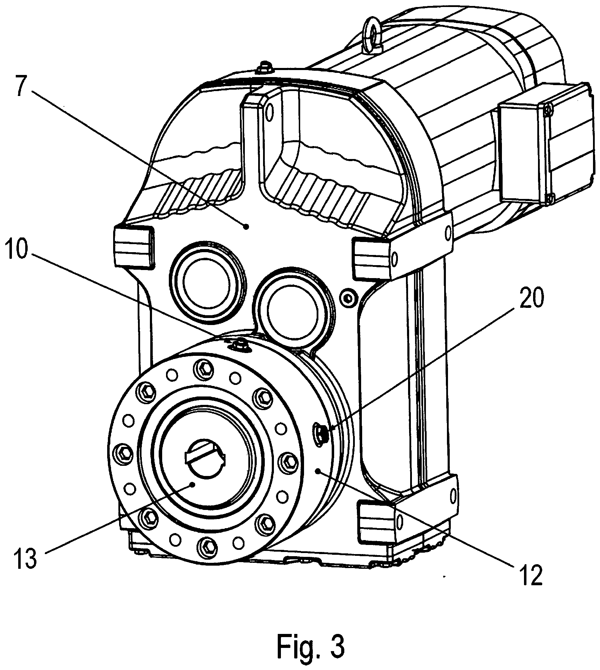

Wie in Figur 3 gezeigt, ist alternativ das Schräglager 14 samt Zwischenteil 8, Flanschteil 12 und Abtriebswelle 13 an einem als Parallelwellengetriebe ausgeführten Getriebe vorsehbar. Somit ist hierfür eine hohe Axialkraft lastseitig aufnehmbar und über das Gehäuseteil 7 abführbar.

Wie in den Figuren gezeigt, ist die Radialbohrung 10 mit einem Entlüftungsventil verschlossen. Somit ist ein Druckausgleich zwischen dem Innenraum des Getriebes und der Umgebung erreichbar. Das Entlüftungsventil ist als Druckausgleichselement ausführbar.

Wie in den Figuren 2 und 3 gezeigt, ist am Flanschteil 12 eine radial durchgehende Ausnehmung mit einem Kontrollfenster 20, insbesondere Ölschauglas, verschlossen. Somit ist der Ölstand kontrollierbar.

Zum Einfüllen von Öl ist ebenfalls die mit dem Kontrollfenster 20 verschlossene Ausnehmung nach Entfernen des Kontrollfensters 20 verwendbar oder die Radialbohrung 10 nach Entfernen des Entlüftungsventils.

Somit ist der Ölstand im Bereich des Schräglagers 14 auf dem vorgeschriebenen Niveau haltbar und überwachbar.

Statt Öl ist auch ein anderer Schmierstoff, wie Fett oder Schmierfett vorsehbar.

Infolge der im Zwischenteil 8 aufgenommenen Wellendichtringe 9 ist innerhalb des Getriebes, insbesondere also für das Zahnrad 5, ein anderer Schmierstoff als für das Schräglager 14 verwendbar. Auf diese Weise ist also eine Optimierung der Schmierstoffe bewirkbar.

Durch eine dritte Radialbohrung 17, die von einer Ölverschlussschraube verschlossen ist, ist ein Ablassen von Schmierstoff ermöglicht, nachdem die Ölverschlussschraube entfernt wurde.

Bei weiteren erfindungsgemäßen Ausführungsbeispielen wird das Gehäuseteil 7 aus zwei oder mehr Teilen hergestellt, welche verbunden sind, beispielsweise durch Schrauben und/oder durch Schweißen.

### Bezugszeichenliste

1 Hohlwelle
2 Schraubteil
3 Wellenteil, insbesondere Hohlwellenteil
4 Lager
5 Zahnrad
6 Lager
7 Gehäuseteil
8 Zwischenteil
9 Wellendichtring
10 Radialbohrung mit Entlüftungsventil
11 Wellendichtring
12 Flanschteil
13 Abtriebswelle
14 Schräglager, insbesondere Axiallager, insbesondere Kegelrollenlager, Tonnenlager
15 Verzahnungsbereich
16 Gewindebereich
17 dritte Radialbohrung mit Ölverschlussschraube
20 Kontrollfenster, insbesondere Ölschauglas

## Patentansprüche

1. Getriebe mit Gehäuseteil (7) und erste Hohlwelle (1),
wobei im Gehäuseteil (7) Lager (4) **des Getriebes** aufgenommen sind, welche die **erste** Hohlwelle (1) drehbar lagern,
**wobei** ein Zwischenteil (8) **des Getriebes** mit dem Gehäuseteil (7) verbunden ist,
wobei ein Flanschteil (12) **des Getriebes** auf der vom Gehäuseteil (7) abgewandten Seite des Zwischenteils (8) mit dem Zwischenteil (8) verbunden ist,
**dadurch gekennzeichnet, dass**
im Flanschteil (12) ein Schräglager (14) **des Getriebes** aufgenommen ist,
welches eine als **zweite** Hohlwelle ausgeführte Abtriebswelle (13) **des Getriebes** drehbar lagert,
wobei die Abtriebswelle (13) eine Außenverzahnung, insbesondere Keilverzahnung, aufweist, welche in eine Innenverzahnung der **ersten** Hohlwelle (1) eingesteckt ist, so dass die Abtriebswelle (13) mit der **ersten** Hohlwelle (1) drehfest verbunden ist,
wobei ein Wellenteil (3) **des Getriebes** einen Außengewindebereich aufweist, der in einen Innengewindebereich der Abtriebswelle (13) eingeschraubt ist,
wobei am Wellenteil (3) eine Stufe ausgebildet ist, gegen welche die **erste** Hohlwelle (1) ansteht,
**wobei im Flanschteil (12) eine Radialbohrung (10) angeordnet ist, in welcher ein** Druckausgleichselement **des Getriebes angeordnet ist,**
**wobei im Flanschteil (12) eine von der Radialbohrung (10) in Umfangsrichtung beabstandete, weitere Radialbohrung ausgeführt ist, in welcher ein transparentes Fenster des Getriebes aufgenommen ist.**

2. Getriebe nach Anspruch 1,
**dadurch gekennzeichnet, dass**
der von der Abtriebswelle (13) in axialer Richtung überdeckte Bereich mit dem von der Hohlwelle (1) in axialer Richtung überdeckten Bereich überlappt,
wobei der von der Außenverzahnung in axialer Richtung überdeckte Bereich von dem von der Hohlwelle (1) in axialer Richtung überdeckten Bereich umfasst ist,
insbesondere wobei die axiale Richtung parallel zur Richtung der Drehachse der **ersten** Hohlwelle (1) ausgerichtet ist.

3. Getriebe nach einem der vorangegangenen Ansprüche,
**dadurch gekennzeichnet, dass**
der von der Abtriebswelle (13) zusammen mit dem von dem Wellenteil (3) in axialer Richtung überdeckten Bereich den von der Hohlwelle (1) in axialer Richtung überdeckten Bereich umfasst,
insbesondere wobei die axiale Richtung parallel zur Richtung der Drehachse der Hohlwelle (1) ausgerichtet ist.

4. Getriebe nach einem der vorangegangenen Ansprüche,
**dadurch gekennzeichnet, dass**
die Abtriebswelle (13), die **erste** Hohlwelle (1) und das Wellenteil (3) koaxial zueinander ausgerichtet sind,
insbesondere wobei das Wellenteil (3) als hohle Welle ausgeführt ist.

5. Getriebe nach einem der vorangegangenen Ansprüche,
**dadurch gekennzeichnet, dass**
auf einen weiteren Außengewindebereich des Wellenteils (3) eine Wellenmutter aufgeschraubt ist, welche die **erste** Hohlwelle (1) berührt, insbesondere wobei die Wellenmutter als Kontermutter fungiert.

6. Getriebe nach einem der vorangegangenen Ansprüche,
**dadurch gekennzeichnet, dass**
der Innenring des Schräglagers (14) gegen eine Stufe der Abtriebswelle (13) ansteht.

7. Getriebe nach einem der vorangegangenen Ansprüche,
**dadurch gekennzeichnet, dass**
wobei der Außenring des Schräglagers (14) im Flanschteil (12) aufgenommen ist und gegen das Zwischenteil (8) ansteht.

8. Getriebe nach einem der vorangegangenen Ansprüche,
**dadurch gekennzeichnet, dass**
im Zwischenteil (8) ein Wellendichtring (9) aufgenommen ist, der zur **ersten** Hohlwelle (1) hin abdichtet.

9. **Getriebe nach Anspruch 8,**
**dadurch gekennzeichnet, dass**
im Zwischenteil (8) ein weiterer Wellendichtring (11) aufgenommen ist, der zur Abtriebswelle (13) hin abdichtet.

10. Getriebe nach einem der vorangegangenen Ansprüche,
**dadurch gekennzeichnet, dass**
ein Zahnrad (5) des Getriebes auf die **erste** Hohlwelle (1) aufgesteckt ist und drehfest mit der **ersten** Hohlwelle (1) verbunden ist,
insbesondere
- wobei der vom Zahnrad (5) in axialer Richtung überdeckte Bereich mit dem von der Abtriebswelle (13) in axialer Richtung überdeckten Bereich überlappt, insbesondere echt überlappt,
- wobei der vom Zahnrad (5) in axialer Richtung überdeckte Bereich mit dem von dem Wellenteil (3) in axialer Richtung überdeckten Bereich überlappt, insbesondere echt überlappt.

11. Getriebe nach einem der vorangegangenen Ansprüche,
**dadurch gekennzeichnet, dass**
**das transparente Fenster als Kontrollfenster (20), insbesondere als Ölschauglas fungiert.**

12. Getriebe nach einem der vorangegangenen Ansprüche,
**dadurch gekennzeichnet, dass**
das Schräglager als Kegelrollenlager oder Tonnenlager ausgeführt ist.

13. Getriebe nach einem der vorangegangenen Ansprüche,
**dadurch gekennzeichnet, dass**
das Zwischenteil (8) einen Zentrierbund aufweist, der an die Lageraufnahme eines Lagers (4) der **ersten** Hohlwelle (1) anliegt.

14. Getriebe nach einem der vorangegangenen Ansprüche,
**dadurch gekennzeichnet, dass**
das Getriebe ein Winkelgetriebe ist, insbesondere so, dass die lastseitig eingeleitete Axialkraft senkrecht zur Drehachse der eintreibenden Welle ausgerichtet ist,
oder dass
das Getriebe ein Parallelwellengetriebe ist, insbesondere so, dass die lastseitig eingeleitete Axialkraft parallel zur Drehachse der eintreibenden Welle ausgerichtet ist.

## Claims

1. A gear unit with housing part (7) and first hollow shaft (1),
wherein in the housing part (7) there are accommodated bearings (4) of the gear unit which rotatably mount the first hollow shaft (1),
wherein an intermediate part (8) of the gear unit is connected to the housing part (7), wherein a flange part (12) of the gear unit on that side of the intermediate part (8) which faces away from the housing part (7) is connected to the intermediate part (8),
**characterised in that**
in the flange part (12) there is accommodated an angular contact bearing (14) of the gear unit
which rotatably mounts an output shaft (13), embodied as a second hollow shaft, of the gear unit,
with the output shaft (13) having external gearing, in particular splined gearing, which is inserted into internal gearing of the first hollow shaft (1), so that the output shaft (13) is connected non-rotatably to the first hollow shaft (1),
with a shaft part (3) of the gear unit having an external thread region which is screwed into an internal thread region of the output shaft (13),
with there being formed on the shaft part (3) a step against which the first hollow shaft (1) is positioned,
with there being arranged in the flange part (12) a radial bore (10) in which a pressure equalisation element of the gear unit is arranged,
with there being formed in the flange part (12) a further radial bore which is spaced apart in the circumferential direction from the radial bore (10), in which further radial bore a transparent window of the gear unit is accommodated.

2. A gear unit according to claim 1,
**characterised in that**
the region covered in the axial direction by the output shaft (13) overlaps with the region covered in the axial direction by the hollow shaft (1),
with the region covered in the axial direction by the external gearing being encompassed by the region covered in the axial direction by the hollow shaft (1),
in particular with the axial direction being oriented parallel to the direction of the axis of rotation of the first hollow shaft (1).

3. A gear unit according to one of the preceding claims,
**characterised in that**
the region covered in the axial direction by the output shaft (13) together with the region covered in the axial direction by the shaft part (3) encompasses the region covered by the hollow shaft (1) in the axial direction,
in particular with the axial direction being oriented parallel to the direction of the axis of rotation of the hollow shaft (1).

4. A gear unit according to one of the preceding claims,
**characterised in that**
the output shaft (13), the first hollow shaft (1) and the shaft part (3) are oriented coaxially with each other,
in particular with the shaft part (3) being embodied as a hollow shaft.

5. A gear unit according to one of the preceding claims,
**characterised in that**
a shaft nut is screwed onto a further external thread region of the shaft part (3), which shaft nut contacts the first hollow shaft (1), in particular with the shaft nut acting as a lock nut.

6. A gear unit according to one of the preceding claims,
**characterised in that**
the inner ring of the angular contact bearing (14) is positioned against a step of the output shaft (13).

7. A gear unit according to one of the preceding claims,
**characterised in that**
with [sic] the outer ring of the angular contact bearing (14) being accommodated in the flange part (12) and being positioned against the intermediate part (8).

8. A gear unit according to one of the preceding claims,
**characterised in that**
a shaft sealing ring (9) which seals off from the first hollow shaft (1) is accommodated in the intermediate part (8).

9. A gear unit according to claim 8,
**characterised in that**
a further shaft sealing ring (11) is accommodated in the intermediate part (8), which further shaft sealing ring seals off from the output shaft (13).

10. A gear unit according to one of the preceding claims,
**characterised in that**
a gear wheel (5) of the gear unit is mounted on the first hollow shaft (1) and is connected non-rotatably to the first hollow shaft (1),
in particular
- with the region covered in the axial direction by the gear wheel (5) overlapping, in particular truly overlapping, with the region covered in the axial direction by the output shaft (13),
- with the region covered in the axial direction by the gear wheel (5) overlapping, in particular truly overlapping, with the region covered in the axial direction by the shaft part (3).

11. A gear unit according to one of the preceding claims,
**characterised in that**
the transparent window acts as an inspection window (20), in particular as an oil sight glass.

12. A gear unit according to one of the preceding claims,
**characterised in that**
the angular contact bearing is embodied as a tapered roller bearing or spherical roller bearing.

13. A gear unit according to one of the preceding claims,
**characterised in that**
the intermediate part (8) has a centring collar which lies against the bearing receptacle of a bearing (4) of the first hollow shaft (1).

14. A gear unit according to one of the preceding claims,
**characterised in that**
the gear unit is a right-angled gear unit, in particular such that the axial force introduced on the load side is oriented perpendicularly to the axis of rotation of the input shaft,
or **in that**
the gear unit is a parallel-shaft gear unit, in particular such that the axial force introduced on the load side is oriented parallel to the axis of rotation of the input shaft.

## Revendications

1. Réducteur comportant une partie carter (7) et un premier arbre creux (1),
des paliers (4) du réducteur étant logés dans la partie carter (7), lesquels supportent le premier arbre creux (1) de manière rotative,
une partie intermédiaire (8) du réducteur étant reliée à la partie carter (7),
une partie bride (12) du réducteur étant reliée à la partie intermédiaire (8) du côté de la partie intermédiaire (8) opposé à la partie carter (7),
**caractérisé en ce que**
un palier à contact oblique (14) du réducteur est logé dans la partie bride (12), lequel supporte de manière rotative un arbre de sortie (13) du réducteur réalisé sous la forme d'un deuxième arbre creux,
l'arbre de sortie (13) présentant une denture extérieure, en particulier une denture cannelée, qui est engagée dans une denture intérieure du premier arbre creux (1), de sorte que l'arbre de sortie (13) est relié au premier arbre creux (1) de manière solidaire en rotation,
une partie arbre (3) du réducteur présentant une zone de filetage extérieur qui est vissée dans une zone de filetage intérieur de l'arbre de sortie (13),
un épaulement étant formé sur la partie arbre (3), contre lequel le premier arbre creux (1) est en appui,
un alésage radial (10) étant disposé dans la partie bride (12), dans lequel est disposé un élément de compensation de pression du réducteur,
un autre alésage radial, espacé de l'alésage radial (10) dans la direction circonférentielle, étant réalisé dans la partie bride (12), dans lequel est logée une fenêtre transparente du réducteur.

2. Réducteur selon la revendication 1,
**caractérisé en ce que**
la zone couverte par l'arbre de sortie (13) dans la direction axiale chevauche la zone couverte par l'arbre creux (1) dans la direction axiale,
la zone couverte par la denture extérieure dans la direction axiale étant comprise dans la zone couverte par l'arbre creux (1) dans la direction axiale,
en particulier, la direction axiale étant orientée parallèlement à la direction de l'axe de rotation du premier arbre creux (1).

3. Réducteur selon l'une des revendications précédentes,
**caractérisé en ce que**
la zone couverte par l'arbre de sortie (13) comprend, avec la zone couverte par la partie arbre (3) dans la direction axiale, la zone couverte par l'arbre creux (1) dans la direction axiale,
en particulier, la direction axiale étant orientée parallèlement à la direction de l'axe de rotation de l'arbre creux (1).

4. Réducteur selon l'une des revendications précédentes,
**caractérisé en ce que**
l'arbre de sortie (13), le premier arbre creux (1) et la partie arbre (3) sont orientés coaxialement les uns aux autres,
en particulier, la partie arbre (3) étant réalisée sous la forme d'un arbre creux.

5. Réducteur selon l'une des revendications précédentes,
**caractérisé en ce que**
un écrou d'arbre est vissé sur une autre zone de filetage extérieur de la partie arbre (3), lequel est en contact avec le premier arbre creux (1), en particulier l'écrou d'arbre faisant fonction de contre-écrou.

6. Réducteur selon l'une des revendications précédentes,
**caractérisé en ce que**
la bague intérieure du palier à contact oblique (14) est en appui contre un épaulement de l'arbre de sortie (13).

7. Réducteur selon l'une des revendications précédentes,
**caractérisé en ce que**
la bague extérieure du palier à contact oblique (14) est logée dans la partie bride (12) et est en appui contre la partie intermédiaire (8).

8. Réducteur selon l'une des revendications précédentes,
**caractérisé en ce que**
une bague d'étanchéité d'arbre (9) est logée dans la partie intermédiaire (8), laquelle assure l'étanchéité par rapport au premier arbre creux (1).

9. Réducteur selon la revendication 8,
**caractérisé en ce que**
une autre bague d'étanchéité d'arbre (11) est logée dans la partie intermédiaire (8), laquelle assure l'étanchéité par rapport à l'arbre de sortie (13).

10. Réducteur selon l'une des revendications précédentes,
**caractérisé en ce que**
une roue dentée (5) du réducteur est emmanchée sur le premier arbre creux (1) et est solidaire en rotation avec le premier arbre creux (1),
en particulier
- la zone couverte par la roue dentée (5) dans la direction axiale chevauchant, en particulier chevauchant véritablement, la zone couverte par l'arbre de sortie (13) dans la direction axiale,
- la zone couverte par la roue dentée (5) dans la direction axiale chevauchant, en particulier chevauchant véritablement, la zone couverte par la partie arbre (3) dans la direction axiale.

11. Réducteur selon l'une des revendications précédentes,
**caractérisé en ce que**
la fenêtre transparente fait fonction de fenêtre de contrôle (20), en particulier de regard d'huile.

12. Réducteur selon l'une des revendications précédentes,
**caractérisé en ce que**
le palier à contact oblique est réalisé sous la forme d'un palier à rouleaux coniques ou d'un palier à rouleaux sphériques.

13. Réducteur selon l'une des revendications précédentes,
**caractérisé en ce que**
la partie intermédiaire (8) présente un collet de centrage qui s'applique contre le logement de palier d'un palier (4) du premier arbre creux (1).

14. Réducteur selon l'une des revendications précédentes,
**caractérisé en ce que**
le réducteur est un réducteur angulaire, en particulier de sorte que la force axiale introduite du côté de la charge est orientée perpendiculairement à l'axe de rotation de l'arbre d'entrée, ou **en ce que**
le réducteur est un réducteur à arbres parallèles, en particulier de sorte que la force axiale introduite du côté de la charge est orientée parallèlement à l'axe de rotation de l'arbre d'entrée.
